(19) Europäisches Patentamt
European Patent Office
Office européen des brevets

(11) **EP 3 706 030 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **20161182.9**

(22) Anmeldetag: **05.03.2020**

(51) Internationale Patentklassifikation (IPC):
**G06F 40/103** (2020.01)    **G06F 40/169** (2020.01)
**G07D 7/00** (2016.01)    **G06N 3/08** (2023.01)

(52) Gemeinsame Patentklassifikation (CPC):
**G06F 40/103; G06F 40/169; G06N 3/08; G06V 10/82; G06V 10/993; G06V 30/413; G07D 7/00;** G06N 3/047

(54) **VERFAHREN UND VORRICHTUNG ZUR AUTOMATISCHEN QUALITÄTSBEURTEILUNG VON WERTDOKUMENTEN**

METHOD AND DEVICE FOR AUTOMATIC QUALITY ASSESSMENT OF VALUE DOCUMENTS

PROCÉDÉ ET DISPOSITIF D'ÉVALUATION AUTOMATIQUE DE LA QUALITÉ DE DOCUMENTS DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2019 DE 102019105985**

(43) Veröffentlichungstag der Anmeldung:
**09.09.2020 Patentblatt 2020/37**

(73) Patentinhaber: **Bundesdruckerei GmbH**
**10969 Berlin (DE)**

(72) Erfinder: **GRIESER, Ralf**
**10589 Berlin (DE)**

(74) Vertreter: **Richardt Patentanwälte PartG mbB**
**Wilhelmstraße 7**
**65185 Wiesbaden (DE)**

(56) Entgegenhaltungen:
EP-A1- 2 394 250     EP-B1- 2 394 250
WO-A2-2006/053685    DE-A1- 102008 041 944
US-A1- 2018 108 101

- ANONYMOUS: "Künstliches neuronales Netz - Wikipedia", 7 March 2019 (2019-03-07), XP055719243, Retrieved from the Internet <URL:https://de.wikipedia.org/w/index.php?title=Künstliches_neuronales_Netz& oldid=186347170#Aktivierungsfunktion> [retrieved on 20200730]
- ANONYMOUS: ""Complex Programmable Logic Device" - Versionsunterschied - Wikipedia", 1 January 2018 (2018-01-01), XP093223010, Retrieved from the Internet <URL:https://de.wikipedia.org/w/index.php?title=Complex_Programmable_Logic_Device& diff=prev&oldid=181606903>
- POPESCU S.: "Hardware implementation of fast neural networks using CPLD", NEURAL NETWORK APPLICATIONS IN ELECTRICAL ENGINEERING, 2000. NEUREL 20 00. PROCEEDINGS OF THE 5TH SEMINAR ON SEPTEMBER 25-27, 2000, 1 January 2000 (2000-01-01), pages 121 - 124, XP093223210, ISBN: 978-0-7803-5512-5, Retrieved from the Internet <URL:https://ieeexplore.ieee.org/stampPDF/getPDF.jsp?tp=&arnumber=902398& ref=aHR0cHM6Ly9pZWVleHBsb3JlLmllZWU ub3JnL2RvY3VtZW50LzkwMjM5OA==> DOI: 10.1109/NEUREL.2000.902398

**Beschreibung**

Gebiet

Die Erfindung betrifft ein Produktionssystem mit einer Vorrichtung zur automatischen Qualitätsklassifizierung eines Erzeugnisses, beispielsweise eines Dokuments oder Druckerzeugnisses.

Hintergrund

Bei der Herstellung jeder Art von Erzeugnissen erfolgt üblicherweise an mindestens einem Punkt des Herstellprozesses eine Qualitätskontrolle, meist zumindest nach der Fertigstellung des Erzeugnisses.

Dies kann unter Zuhilfenahme von Messgeräten erfolgen, deren den Istzustand einer Eigenschaft des Erzeugnisses repräsentierende Messergebnisse mit entsprechenden Sollwerten oder Sollwertbereichen verglichen werden. Die Qualitätskontrolle liefert am Ende eine mindestens zwei Klassen umfassende Klassifizierung, bspw. "gut" oder "schlecht", "brauchbar" oder "nicht brauchbar" oder dergleichen. Die Klassifizierung kann auch eine Einstufung des Erzeugnisses in mehr als zwei Qualitätsklassen liefern, bspw. "gut", "schlecht" oder "manuelle Nachkontrolle erforderlich", oder schlicht eine Einstufung in eine von mehreren vorherbestimmten Qualitätsklassen.

Wenn eine Vielzahl von Eigenschaften eines Erzeugnisses bei der Beurteilung berücksichtigt werden kann es vorkommen, dass jede der Vielzahl von gemessenen Eigenschaften für sich innerhalb eines akzeptablen Sollwertebereichs liegt, das Erzeugnis in Summe auf einen menschlichen Betrachter aber einen minderwertigen, ungenügenden oder sonstwie nicht akzeptablen Gesamteindruck macht. Eine solche komplexe Qualitätsklassifizierung ist wegen des letztlich überwiegend subjektiven Qualitätsbegriffs maschinell bislang nicht zufriedenstellend darstellbar. Dies kann unter anderem daran liegen, dass bei einer Vielzahl von qualitätsrelevanten Eigenschaften, die bei einer Qualitätseinstufung berücksichtigt werden, die Zahl der möglichen Kombinationen von Bewertungen einzelner Eigenschaften die zu einer "noch guten" oder "schon schlechten" Gesamtbeurteilung führen sehr groß sein kann, und vor allem daran, dass die jeweiligen "problematischen" Kombinationen nur schwierig zu definieren sind. Insbesondere wenn für die Qualitätseinstufung nur wenig Zeit zur Verfügung steht, wie bspw. bei einer Serienfertigung von Erzeugnissen mit einer hohen Fertigungstaktrate, wird die Qualitätsklassifizierung deshalb durch besonders geschulte Mitarbeiter vorgenommen, welche die Erzeugnisse stichprobenartig oder vollumfänglich prüfen. Das jedem Menschen eigene subjektive Empfinden kann jedoch auch durch intensive Schulungen nicht so beeinflusst werden, dass unterschiedliche Prüfer stets zu übereinstimmenden Qualitätsklassifizierungen für dasselbe Erzeugnis gelangen.

Der subjektive Einfluss von Eigenschaften eines Erzeugnisses auf das Qualitätsempfinden ist vor allem bei den Erzeugnissen relevant, die auch nach der Herstellung von Menschen gehandhabt oder betrachtet werden, bspw. bei Druckerzeugnissen, die nicht nur der reinen Informationsvermittlung dienen. Insbesondere bei Sicherheitsdokumenten kann eine schlechte Erkennbarkeit der damit verbundenen sicherheitskritischen Merkmale sich ungünstig auswirken, etwa einen erhöhten Aufwand bei der Kontrolle hervorrufen, oder zur Zurückweisung führen. Je nach Art des Sicherheitsdokuments und der damit verbundenen Sicherheitsmerkmale kann auch eine maschinelle Prüfung durch ungenügende Qualität des Sicherheitsdokuments erschwert oder verunmöglicht werden.

Als Sicherheitsdokumente können unter anderem die Dokumente bezeichnet werden, die aufgrund einer Ausrüstung mit einem oder mehreren Sicherheitsmerkmalen für die menschliche sensorische, insbesondere visuelle und/oder haptische Erfassung über Eigenschaften verfügen, die einer Fälschung oder Nachbildung technische Erschwernisse entgegenstellen. Im Kontext dieser Beschreibung kann ein Sicherheitsdokument auch ein Sicherheitsmerkmal darstellen.

Sicherheitsdokumente können zur Bestätigung der Identität einer Person oder der Echtheit einer Sache dienen, bspw. Identitätskarten, Ausweise, Reisepässe, Aufenthaltstitel, Visa, Führerscheine, Kundenkarten, aber auch Wertdokumente umfassen, die einen Wert repräsentieren, bspw. Eintrittskarten, Gutscheine, Kreditkarten, Bankkarten, Bezahlkarten, aber auch Geldscheine und Postwertzeichen. Auch Urkunden können Sicherheitsdokumente darstellen.

Das Dokument WO 2006/053685 A2 beschreibt blattförmige Wertdokumente mit einem maschinenlesbaren Sicherheitsmerkmal sowie Verfahren und Vorrichtungen zur Herstellung oder Prüfung solcher Wertdokumente, wobei ein blattförmiges Wertdokument mit einem im unsichtbaren Spektralbereich lesbaren Code, insbesondere einem Barcode, versehen ist. Der Barcode ist eine Kodierung mindestens einer messbaren Eigenschaft des Wertdokuments, und der Barcode kann somit als eine der Banknote eigene Signatur verwendet werden, wenn die kodierten Eigenschaften unterschiedliche Banknoten oder Banknotengruppen unterscheiden. Die Verwendung eines Barcodes, der im unsichtbaren Spektralbereich gelesen werden kann, ist eine besonders gute Sicherheit gegen Fälschungen, zum Beispiel in Form von Farbkopien. Die Wertdokumente können somit hinsichtlich ihrer Echtheit geprüft und klassifiziert werden.

**EP 3 706 030 B1**

Zusammenfassung

Es ist daher eine Aufgabe der vorliegenden Erfindung ein Produktionssystem mit einer Vorrichtung anzugeben, das eine automatische Qualitätsklassifizierung von Erzeugnissen, insbesondere Dokumenten, unter Berücksichtigung einer Vielzahl von Eigenschaften innerhalb einer kurzen Zeit bzw. mit einer hohen Durchsatzrate ermöglicht.

Eine erfindungsgemäße Vorrichtung des Produktionssystems umfasst eine Eingangsstufe, die zum Empfangen einer Vielzahl von Messwerte qualitätsrelevanter Eigenschaften eines Erzeugnisses repräsentierenden Eingangssignalen eingerichtet ist. Der Empfang der Eingangssignale kann insbesondere parallel erfolgen, die zu einem Erzeugnis gehörenden Eingangssignale können also im Wesentlichen zeitgleich an die Eingangsstufe angelegt bzw. dieser zugeführt sein.

Qualitätsrelevante Eigenschaften umfassen die Abmessungen eines Erzeugnisses, die Gleichmäßigkeit bzw. Lückenlosigkeit eines Farbauftrags oder einer Versiegelung, eines Farbumfangs, die Gleichmäßigkeit der Oberfläche und der Kanten, die Rauheit oder Reflexionseigenschaften einer Oberfläche, die Position, Erkennbarkeit, Lesbarkeit und/oder die Qualität des Druckbildes von Text, Schriftzügen, Sicherheitsmerkmalen und dergleichen

Die Eingangssignale können als digitalisierte Abtastwerte von Sensorsignalen vorliegen, es ist jedoch auch möglich die Sensorsignale direkt an die andere Stufe anzulegen. In letzterem Fall erfolgt zweckmäßigerweise eine Umwandlung in ein digitales Signal innerhalb der Eingangsstufe. Die Eingangssignale können auch aus einem Speicher, bspw. einer Datenbank, gelesen und der Vorrichtung des Produktionssystems zugeführt werden. Hierbei ist eine eindeutige Zuordnung von Eingangssignalen zu den Erzeugnissen einzuhalten.

Die Sensorsignale können beispielsweise durch Messungen mechanischer, elektrischer, elektromagnetischer oder optischer Eigenschaften erzeugt werden, mittels entsprechender kontaktbehafteter oder kontakt- bzw. berührungsloser Messungen. Dabei können Eigenschaften unter Beleuchtung mit Licht unterschiedlicher Wellenlängen oder unter Bestrahlung mit Radiofrequenzsignalen ermittelt werden. Eigenschaften können auch durch Stellwerte, Mess- oder Regelgrößen von an der Herstellung des Erzeugnisses beteiligten Maschinen repräsentiert sein oder von diesen abgeleitet werden. So kann bspw. der Stromverbrauch eines Heizelements beim Aufheizen eines Erzeugnisses auf eine bestimmte Temperatur gemessen werden, wobei eine Abweichung hier auf eine Abweichung des Erzeugnisses schließen lässt, z.B. eine zu große Restfeuchte. Auch eine digitale Kommunikation zwischen dem Erzeugnis oder eines Bauteils mit einem entsprechenden Lese- oder Schreibgerät kann ein Sensorsignal im Sinne der Erfindung darstellen.

Die erfindungsgemäße Vorrichtung des Produktionssystems umfasst außerdem eine Analysestufe, die eine Analyseeinheit oder mehrere, unterschiedlichen Fehlerklassen zugeordnete Analyseeinheiten aufweist. Jede Analyseeinheit der Analysestufe gibt an einem Ausgang jeweils ein Ergebnissignal aus. Die Analyseeinheiten sind an die jeweilige Fehlerklasse angepasst konfigurierbar und/oder parametrisierbar.

Die erfindungsgemäße Vorrichtung des Produktionssystems umfasst ferner eine Ausgangsstufe die dazu eingerichtet ist, von der Analysestufe zugeführte Ergebnissignale in eine mindestens zweistufige Qualitätsklassifizierung umzusetzen und an einem Ausgang auszugeben. Eine zweistufige Qualitätsklassifizierung kann beispielsweise eine Einstufung in "gut" oder "schlecht" abbilden, es ist aber auch möglich drei oder mehr Stufen am Ausgang auszugeben, oder eine Einteilung in Perzentile oder dergleichen.

Außerdem umfasst die erfindungsgemäße Vorrichtung des Produktionssystems mehrere zwischen der Eingangsstufe und der Analysestufe parallel angeordnete Perzeptronen. Jedes Perzeptron umfasst eine oder mehrere Logikschaltungen oder -funktionen, welche eine oder eine Abfolge von Polynomfunktionen und/oder nichtlinearen Funktionen, Transformationen und/oder Aktivierungsfunktionen repräsentieren. Eine Abfolge von Funktionen bedeutet in diesem Kontext, dass das Ergebnis einer Funktion einer nächsten Funktion als Eingangssignal zugeführt wird. Die Aktivierungsfunktionen können insbesondere nichtlinear, zum Beispiel sigmoid, stückweise linear oder eine Schwellenwert- oder Sprungfunktion sein. Jede der ein oder mehreren Logikschaltungen eines jeden Perzeptrons ist an die von den jeweils daran angelegten Eingangssignalen repräsentierte Eigenschaft angepasst konfigurierbar und/oder parametrisierbar. Jedem Perzeptron ist ein Eingangssignal der Eingangsstufe zugeführt, welches den durch die Logikschaltungen abgebildeten Funktionen und Transformationen unterworfen und an einem Ausgang des Perzeptrons als Ausgangssignal bereitgestellt wird.

Ein Ausgangssignal eines jeden Perzeptrons ist einer Analyseeinheit der Analysestufe zugeführt. Die Ausgangssignale der Perzeptronen stellen individuelle Bewertungen der jeweiligen Eigenschaften dar, welche in der Analysestufe und schließlich der Ausgangsstufe zur Qualitätsklassifizierung des Erzeugnisses genutzt werden. Die Ausgangssignale der Perzeptronen sind dabei jeweils den Analyseeinheiten zugeführt, deren Fehlerklasse dem Eingangssignal des Perzeptrons zugeordnet ist. Wenn bspw. ein Eingangssignal einen Messwert für eine Eigenschaft repräsentiert, bei der eine Abweichung vom Sollwert außerhalb einer Toleranz einen kritischen Fehler darstellt, der zur unmittelbaren Beurteilung des Erzeugnisses als "schlecht" oder "unbrauchbar" zur Folge haben muss, wird das entsprechende Ausgangssignal des Perzeptrons der Analyseeinheit für kritische Fehler zugeführt. Jede Analyseeinheit liefert ein anhand der Gesamtheit aller ihr zugeführten Ausgangssignale ermitteltes, für die entsprechende Fehlerklasse

3

geltendes Ergebnissignal. Die Qualitätsklassifizierung des Erzeugnisses erfolgt anhand der Ergebnissignale aller Fehlerklassen. Jedes Ausgangssignal kann einer oder mehreren Fehlerklassen zugewiesen sein. Die Fehlerklassen können bspw. "kritische Fehler", "Hauptfehler" und "Nebenfehler" umfassen.

Die Anzahl der in jeder Fehlerklasse tolerierbaren Fehler kann unterschiedlich sein. So kann bspw. ein Eingangssignal ein per optischer Zeichenerkennung (OCR) erfasster Name auf einem Ausweisdokument sein, der mit einer Vorgabe verglichen wird. Wenn der Name falsch geschrieben ist, oder die Auswertung von Erkennungsparametern einer OCR-Funktion ergibt, dass zur Erkennung des Namens eine zu starke Fehlerkorrektur angewendet werden musste, stellt dies für ein Ausweisdokument einen kritischen Fehler dar, der das Dokument als unbrauchbar klassifiziert.

Andererseits kann eine gewisse Zahl von Kratzern auf dem Ausweisdokument, die kosmetische Fehler darstellen, als unbedenkliche Nebenfehler gewertet werden, insbesondere wenn sie die "Funktion" des Dokuments nicht beeinträchtigen. Erst bei Überschreiten der zulässigen Zahl von Nebenfehlern wird das Dokument im Ergebnis als unbrauchbar klassifiziert. Auf diese Weise kann auch eine Überschreitung der zulässigen Zahl von Fehlern in jeder Fehlerklasse für sich eine Klassifizierung des Erzeugnisses als unbrauchbar bewirken.

Bei einer Ausführung der erfindungsgemäßen Vorrichtung des Produktionssystems ist zwischen der Eingangsstufe und einem Perzeptron eine Verknüpfungsstufe angeordnet, welche zwei oder mehrere Eingangssignale arithmetisch kombiniert und als ein gemeinsames Eingangssignal dem Perzeptron zuführt. Die Kombination kann dabei die Addition mehrerer Eingangssignale umfassen, aber auch die Bildung einer Differenz, eines Produkts oder eines Quotienten aus Eingangssignalen beinhalten. Kombinationen von Eingangssignalen beziehen sich vorzugsweise auf gleichartige Eigenschaften, z.B. an unterschiedlichen Stellen gemessene gleiche Eigenschaften, oder weisen zumindest gleiche Einheiten oder Größenordnungen auf. Sofern ein Eingangssignal direkt, also ohne arithmetische Kombination mit anderen Eingangssignalen einem Perzeptron zugeführt ist kann die Verknüpfungsstufe auch als Addition von null oder Multiplikation mit eins aufgefasst werden. Eine solche Implementierung kann sinnvoll sein, wenn nur einige Signale kombiniert werden, andere hingegen nicht, um die Parallelität der Signalverarbeitung in den Perzeptronen zu erhalten.

Die Logikschaltungen der Perzeptronen der Vorrichtung des Produktionssystems sind vorzugsweise in einer parallelen Pipeline-Architektur implementiert. Das sogenannte "Pipelining" bezieht sich dabei auf die parallele Bearbeitung der Eingangssignale in den jeweiligen Logikschaltungen der parallel zwischen Eingangsstufe und Analysestufe angeordneten Perzeptronen. Aufgrund der parallelen Verarbeitung aller zu einem Erzeugnis gehörenden Eingangssignale können den Perzeptronen die Eingangssignale für das nächste zu klassifizierende Erzeugnis bereits zugeführt werden, wenn die jeweils ersten Logikschaltungen die von ihnen repräsentierten Funktionen auf die Eingangssignale das vorhergehenden Erzeugnisses angewendet haben und das Ergebnis an die nächste Logikschaltung der Perzeptronen übergeben haben. Perzeptronen, die nicht alle Funktionen und Transformationen auf das an sie angelegte Eingangssignal anwenden, können anstelle der nicht vorhandenen Funktion oder Transformation eine Zwischenspeicherung des jeweiligen Ergebnisses vorsehen, sodass an den Ausgängen aller Perzeptronen alle zu einem Erzeugnis gehörenden Ergebnisse parallel, d.h. zeitgleich, bereitstehen.

Die Perzeptronen können grundsätzlich identische Grundstrukturen aufweisen, die durch eine entsprechende Parametrierung an die jeweilige, von dem Eingangssignal repräsentierte Eigenschaft anpassbar sind. Die Parametrierung jedes Perzeptrons kann dabei bei der Initialisierung fest vorgegeben werden, oder zumindest teilweise passend zu jedem Eingangssignal zur Laufzeit angepasst werden.

Die erfindungsgemäße Vorrichtung des Produktionssystems umfasst bei einer Ausführung einen programmierbaren digitalen Baustein, dessen Logikelemente zur Implementierung der Eingangsstufe, der Anpassungsstufe, der Analysestufe, der Ausgangsstufe und/oder der Perzeptronen, deren jeweiliger Beziehungen zueinander, sowie von Schnittstellen zur Kommunikation mit anderen Bauteilen der Vorrichtung anhand einer Beschreibung konfigurierbar sind. Die Beschreibung kann in einem Konfigurationsspeicher auslesbar abgelegt sein. Der Konfigurationsspeicher kann einen nicht flüchtigen Speicher umfassen, beispielsweise ein EEPROM, ein Flash-EEPROM oder dergleichen. Der programmierbare digitale Baustein kann ein sogenanntes "Complex Programmable Logic Device" (CPLD) oder ein sogenanntes "Field Programmable Gate Array" (FPGA) umfassen. Sofern eine flexible Änderung der Struktur der Eingangsstufe, Anpassungsstufe, Analysestufe, Ausgangsstufe und der Perzeptronen nicht erforderlich ist, ist es auch möglich die Logikelemente mittels eines sogenannten "Application Specific Integrated Circuit" (ASIC) abzubilden.

Ein FPGA besteht, ähnlich wie ein CPLD, aus vielen Logikelementen, hauptsächlich FlipFlops (FF) und davor gelagerten kombinatorischen Logikschaltungen. Diese sind entweder Verknüpfungen verschiedener Logikgatter, die über elektronische "Schalter" entsprechend der gewünschten Funktion miteinander verknüpft werden können oder es handelt sich um in Look-up-Tabellen, mit denen die Logikfunktionen explizit realisiert werden. Eine Look-up-Tabelle kann eine beliebige kombinatorische Funktion, z.B. NAND, XOR, AND, Multiplexer etc., aus den Eingangssignalen realisieren. Die Anzahl der Eingangssignale pro Look-up-Tabelle ist vom FPGA abhängig und liegt bspw. zwischen 4 und 6. Für Funktionen die mehr Eingänge erfordern als eine einzige Look-up-Tabelle besitzt ("hohes Fan-In"), werden mehrere Look-up-Tabellen direkt miteinander verschaltet. Flip-Flops dienen dazu, Signalwerte zwischenzuspeichern, um sie im nächsten Takt weiterverarbeiten zu können. Das Verhältnis zwischen der Anzahl der Look-up-Tabellen und der Anzahl der Flip-Flops ist häufig 1:1. Aktuelle FPGAs bestehen aus bis zu einigen zehntausend Logikelementen, während CPLDs deutlich weniger Logikzellen aufweisen.

Die logischen Schalter und Speicher sind in den meisten FPGAs durch SRAM-Speicherzellen realisiert, welche beim Bootprozess passend geladen werden. Das Laden dieser Konfigurationsdaten bzw. Verknüpfungsregeln geschieht dabei in der Regel aus einem speziellen Flash-ROM-Baustein heraus. Es kann aber auch ein Mikrocontroller benutzt werden. Die meisten FPGAs bieten daher für diesen Konfigurationsvorgang mehrere Modi an (seriell, parallel, Master/Slave). Da die SRAM-Zellen ihren Inhalt beim Abschalten der Versorgungsspannung verlieren, muss ein SRAM-basierter FPGA bei jedem Einschalten neu konfiguriert werden. Daher benötigt ein solcher FPGA einige Millisekunden bis zu einigen Sekunden, bevor er voll betriebsbereit ist.

Entsprechend kann die Vorrichtung des Produktionssystems bei dieser Ausführung einen Prozessor mit flüchtigem und/oder nichtflüchtigem Speicher umfassen, der den programmierbaren digitalen Baustein initial programmiert und ggf. während des Betriebs nicht in dem Baustein implementierte Steuer- und Kontrollfunktionen der Vorrichtung des Produktionssystems ausführt, insbesondere Zugriffe auf externe Komponenten und Schnittstellen steuert.

Grundsätzlich kann die Implementierung der Eingangsstufe, der Anpassungsstufe, der Analysestufe, der Ausgangsstufe und/oder der Perzeptronen, sowie deren jeweiliger Beziehungen zueinander auch komplett als Computerprogramm erfolgen, das auf einem Computer ausgeführt wird. Dabei können die physikalischen und logischen Schnittstellen des Computers dazu genutzt werden, die Eingangssignale zu empfangen und die Qualitätsklassifizierung auszugeben.

Bei einer oder mehreren der hier beschriebenen Ausführungen ist die erfindungsgemäße Vorrichtung des Produktionssystems eingerichtet, zur Anwendung der Polynomfunktionen und/oder der nichtlinearen Funktionen auf die Eingangssignale Zugriffe auf entsprechende Look-up-Tabellen auszuführen. Die Look-up-Tabellen weisen einem Eingangswert einen entsprechenden Ausgangswert eindeutig zu. Insbesondere Funktionen, die eine Vielzahl von Rechenoperationen auf einem allgemeinen Mikroprozessor oder komplexe speziell dazu eingerichtete Rechenwerke erfordern, können durch die Verwendung von Look-up-Tabellen bei einem bekannten und begrenzten Bereich von Eingangswerten sehr schnell Ergebnisse liefern. Zu den vorteilhaft in Look-up-Tabellen implementierbaren Funktionen zählen unter anderem Exponentialfunktionen, Logarithmen, harmonische Funktionen, Aktivierungsfunktionen wie bspw. Sigmoid-Funktionen und dergleichen. Zur weiteren Verringerung des Speicherbedarfs der Look-up-Tabellen können Funktionen an bestimmten Stellen mit einer feineren Auflösung abgebildet werden, während andere Stellen gröber aufgelöst sind. Solche Stellen können sich bspw. in der Nähe des Wendepunkts bei Aktivierungsfunktionen befinden.

Die Look-up-Tabellen können dabei in einem Speicherbereich des programmierbaren digitalen Bausteins abgelegt sein oder in einem externen Speicherelement, welches über eine entsprechende Schnittstelle der Vorrichtung des Produktionssystems ansteuerbar ist. In letzterem Fall kann die in einer Look-up-Tabelle abgebildete Funktion auf besonders einfache Weise an geänderte Bedürfnisse angepasst werden, auch wenn die Struktur der Logikelemente innerhalb des programmierbaren digitalen Bausteins nicht oder nicht auf einfache Weise änderbar ist. Die Änderung einer Look-up-Tabelle kann auch für die Änderung von Parametern einer Funktion genutzt werden. Die Änderung einer Look-up-Tabelle kann durch eine separate Programmsteuerung erfolgen, oder durch geeignete Umleitung von Adressen beim Aufruf der Tabellen.

Die Verwendung von Look-up-Tabellen ist auch bei einer Implementierung der Eingangsstufe, der Anpassungsstufe, der Analysestufe, der Ausgangsstufe und/oder der Perzeptronen, sowie deren jeweiliger Beziehungen zueinander als Computerprogramm möglich. Dadurch kann beim Betrieb der Vorrichtung Rechenzeit eingespart werden, außerdem können dieselben Look-up-Tabellen wie bei der Implementierung mit programmierbaren digitalen Bausteinen verwendet werden. Die Verwendung derselben Tabellen bietet den Vorteil, dass Änderungen von Parametern zunächst bei einer als Software implementierten Version getestet werden können, bevor sie nach erfolgreicher Prüfung in die Vorrichtungen des Produktionssystems mit programmierbaren digitalen Bausteinen übertragen werden.

Die Funktionen und Transformationen der Perzeptronen können durch aus Simulationen und/oder Analysen des Herstellprozesses erhaltene, extern vorgebbare Parameter beschreibbar oder parametrisierbar sein. Dabei können während einer laufenden Produktion gewonnene Erkenntnisse in neue, geänderte Parameter überführt werden, die zu neuen Abfolgen von Funktionen und/oder Transformationen in einem oder mehreren Perzeptronen führen, oder zu neuen Parametrierungen der Funktionen und/oder Transformationen. Anhand der neuen Parameter können der programmierbare digitale Baustein und/oder die Look-up-Tabellen an geänderte Bedingungen oder Anforderungen angepasst werden. Die Verwendung von spezifischem Vorwissen aus Simulationen oder Analysen und einer grundsätzlich als geeignet bekannten Struktur zur Bewertung der Eingangssignale führt zusammen mit der flexiblen Anpassbarkeit einzelner Perzeptronen zu gegenüber reinem Maschinenlernen, etwa mit neuronalen Netzen, schnellerer Konvergenz der Qualitätseinstufung.

Bei fest implementierten Zeigern, die auf in externen Speichern gespeicherte Look-up-Tabellen zeigen, kann durch sogenanntes Paging oder durch überschreiben von Look-up-Tabellen zur Laufzeit eine individuelle Anpassung der darin abgebildeten Funktionen oder Transformationen erfolgen.

Die erfindungsgemäße Vorrichtung ist Teil eines Produktionssystems für Dokumente, insbesondere für Sicherheitsdokumente bzw. individuell unterscheidbare Dokumente gleicher Art. Das Produktionssystem kann eine erfindungsgemäße Vorrichtung des Produktionssystems zur Qualitätsklassifizierung an unterschiedlichen Stellen des Herstellungsprozesses aufweisen, u.a. auch am Ende des Prozesses. Die Gesamt-Qualitätsklassifizierung oder Einzelwerte daraus können zur Regelung des Herstellprozesses einer entsprechenden Steuereinheit zugeführt sein. So kann bspw. ein Dokument, dessen Gesamt-Qualitätsklassifizierung "nicht in Ordnung" ergeben hat, erneut hergestellt werden. Bei individualisierten Dokumenten wie bspw. Ausweisdokumenten kann hierzu die Qualitätsklassifizierung eine Identifikation eines jeden Dokuments beinhalten oder damit verknüpft sein, damit die erneute Herstellung des richtigen individualisierten Dokuments erfolgt. Die Qualitätsklassifizierung kann zur Erhöhung der Sicherheit gegen Manipulationen von der Vorrichtung signiert sein, wobei die Signatur vor Beginn der erneuten Produktion von dem Produktionssystem überprüft wird.

Wenn eine erfindungsgemäße Vorrichtung des Produktionssystems zur Qualitätsklassifizierung an Zwischenschritten des Produktionsprozesses eingesetzt wird, kann ein Abbruch der Herstellung und Verwerfen des bis dahin vorliegenden Teil-Erzeugnisses auch vor dem Ende des kompletten Herstellprozesses erfolgen. Die erneute Herstellung bzw. das Auslösen der erneuten Herstellung erfolgen analog.

Einstellungen von Komponenten des Produktionssystems können anhand der Qualitätsklassifizierung für die erneute Herstellung, aber auch für andere zur Herstellung anstehende oder bereits im Herstellprozess befindliche Erzeugnisse angepasst werden, um so unter Umständen einer hohen Ausschussquote entgegenzuwirken.

Das Produktionssystem kann auch in Abhängigkeit von der durchschnittlichen mit der erfindungsgemäßen Vorrichtung des Produktionssystems ermittelten Qualitätsklassifizierung über einen bestimmten, vorzugsweise unmittelbar zurückliegenden Zeitraum, Prozessparameter wie z.B. eine Herstellrate oder die Anzahl von Messungen an jedem Produkt anpassen. Hierbei kann insbesondere die Ausführung mit einem programmierbaren digitalen Baustein einen Vorteil bei der Geschwindigkeit bieten, weil Ergebnisse sehr schnell vorliegen.

Die erfindungsgemäße Vorrichtung des Produktionssystems ermöglichen es, eine Vielzahl qualitätsrelevanter Eigenschaften eines Erzeugnisses simultan einer Klassifizierung zuzuführen und reproduzierbare Ergebnisse mit geringem Rechenaufwand zu erhalten. Außerdem ist eine Justierung der Bewertungsmaßstäbe separat für jede Eigenschaft mit geringem Aufwand möglich, so dass eine automatische Qualitätsklassifizierung auch bei neuen Erzeugnissen oder bei neuen Herstellprozessen verfügbar ist, ohne von der Grundstruktur abweichen zu müssen. Die Verwendung von Look-up-Tabellen für Bewertung und Analyse anstelle programmtechnisch ungünstiger bedingter Verzweigungen oder Sprünge führt zudem zu einer weitgehend gleichen und vor allem kurzen Bearbeitungszeit oder geringen Taktzyklenzahl für jeden Satz von Eingangssignalen.

Außer bei Herstellprozessen kann eine erfindungsgemäße Vorrichtung des Produktionssystems auch bei der Kontrolle der Echtheit von Erzeugnissen angewendet werden, insbesondere wenn ein oder mehrere Merkmale bei Falsifikaten herstellungs- oder materialbedingt stets Abweichungen von "echten" Erzeugnissen aufweisen. Materialbedingte Abweichungen können bspw. in Eigenschaften der verwendeten Materialien liegen, die nur unter bestimmten Bedingungen erkennbar sind, etwa Beleuchtung oder Bestrahlung mit Licht oder elektromagnetischen Wellen bestimmter Wellenlängen. Herstellungsbedingte Abweichungen können bspw. für das bloße Auge nicht erkennbare zusätzliche Schichten, etwa Klebeschichten oder dergleichen umfassen, die durch geeignete Messverfahren in numerisch bewertbare Eigenschaften übersetzt werden.

Insbesondere bei einer Implementierung mit programmierbaren digitalen Bausteinen kann die Vorrichtung des Produktionssystems mit begrenzten Prozessor- und Speicherressourcen ausgestattet sein. Die begrenzten Ressourcen und die Implementierung in dem programmierbaren digitalen Baustein reduzieren die Gefahr der Manipulation der Vorrichtung durch Schadprogramme, die die grundsätzliche Funktion der Vorrichtung des Produktionssystems verändern. Die strukturierte Modellierung der Perzeptronen ermöglicht eine flexible Anpassung an unterschiedliche Eingangssignale selbst bei einer hardware-artigen Implementierung.

Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:

Fig. 1	ein erstes exemplarisches Blockschaltbild der erfindungsgemäßen Vorrichtung des Produktionssystems,

Fig. 2	eine schematische Erläuterung der pipelineartigen Struktur der erfindungsgemäßen Vorrichtung des Produktionssystems,

Fig. 3	ein schematisches Blockschaltbild von Komponenten der erfindungsgemäßen Vorrichtung des Produktionssystems,

Fig. 4	ein schematisches Ablaufdiagramm der von der erfindungsgemäßen Vorrichtung des Produktionssystems ausgeführten Verfahrensschritte, wobei die in Fig. 4 dargestellten Verfahrensschritte nicht Teil der vorliegenden Erfindung sind,

Fig. 5    eine exemplarische Darstellung des Wegs eines Eingangssignals durch die erfindungsgemäße Vorrichtung des Produktionssystems,

Fig. 6    eine beispielhafte Vorrichtung des Produktionssystems mit mehreren Eingangssignalen sowie deren Weg durch die unterschiedlichen Bearbeitungsstufen,

Fig. 7    eine Darstellung beispielhafter Messwerte, die der Vorrichtung des Produktionssystems zugeführt sein können,

Fig. 8    eine Darstellung der in der Vorrichtung des Produktionssystems transformierten Messwerte aus Figur 7,

Fig. 9    eine Darstellung der Anwendung einer Aktivierungsfunktion auf die transformierten Messwerte aus Figur 8,

Fig. 10    zwei beispielhafte Aktivierungsfunktionen für unterschiedliche Parameter,

Fig. 11    ein weiteres Beispiel einer Aktivierungsfunktion eines Perzeptrons, anhand derer Abweichungen von Messwerten von einem Sollwert ein Wert für das resultierende Ausgangssignal zugewiesen wird, und

Fig. 12    ein Beispiel für eine nichtlineare Funktion.

Gleiche oder ähnliche Elemente sind in den Figuren mit gleichen oder ähnlichen Bezugszeichen versehen.

Ausführungsbeispiel

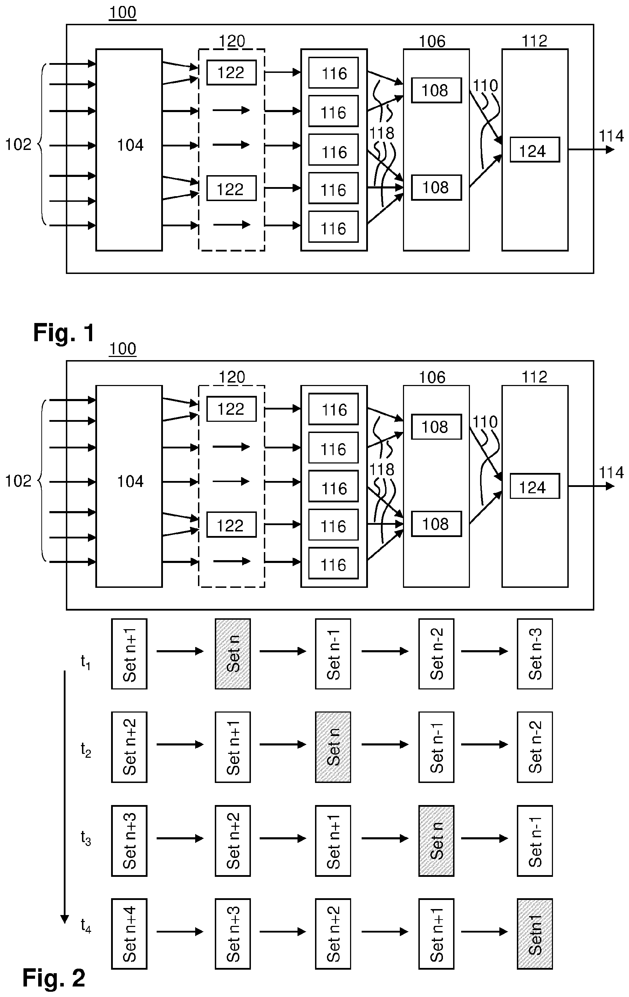

Figur 1 zeigt ein erstes exemplarisches Blockschaltbild der erfindungsgemäßen Vorrichtung des Produktionssystems 100. Mehrere Eingangssignale 102 sind einer Eingangsstufe 104 zugeführt, von der aus sie an eine optionale Verknüpfungsstufe 120 gelangen. Die Verknüpfungsstufe kann dazu eingerichtet sein, in einer oder mehreren Kombinationseinheiten 122 jeweils mehrere Eingangssignale 102 arithmetisch zu kombinieren und als ein Eingangssignal an ein Perzeptron 116 weiterzuleiten. Wenn keine Kombination erfolgt kann die Verknüpfungsstufe 120 das Eingangssignal 102 direkt an das entsprechende Perzeptron 116 weiterleiten. Für die Weiterleitung können Kombinationseinheiten konfiguriert sein, eine Multiplikation mit "1" oder eine Addition von "0" durchzuführen, oder eine direkte Weiterleitung ohne Bearbeitung des Signals vorzunehmen. Um zwischen Ein- und Ausgang der Verknüpfungsstufe unabhängig von einer arithmetischen Kombination für alle Signale eine gleiche Laufzeit zu erhalten können entsprechende Zwischenspeicher vorgesehen sein (nicht in der Figur gezeigt). Ein Ausgangssignal 118 eines jeden Perzeptrons 116 ist einer Analyseeinheit 108 einer Analysestufe 106 zugeführt. Mehrere Ausgangssignale 118 der Perzeptronen 116 können dabei derselben Analyseeinheit 108 zugeführt sein, wobei die Ausgangssignale 118 der Perzeptronen 116 zuvor arithmetisch kombiniert werden können, z.B. addiert (nicht in der Figur gezeigt). An einem Ausgang jeder Analyseeinheit 108 der Analysestufe 106 steht ein Ergebnissignal 110 zur Verfügung, das einer Ausgangsstufe 112 zugeführt ist. Ausgangsstufe 112 ist dazu eingerichtet, das oder die Ergebnissignale 110 in einem oder mehreren Umsetzern 124 in eine mindestens zweistufige Qualitätsklassifizierung umzusetzen und an einem Ausgang 114 auszugeben. Die Qualitätsklassifizierung kann einer in der Figur nicht dargestellten optischen Anzeige zugeführt werden, bspw. einem Display oder einer Leuchtanzeige, wo die Qualitätsklassifizierung z.B. durch unterschiedlichen Farben repräsentiert ist, etwa "grün" für "gut" und "rot" für "schlecht". Die Qualitätsklassifizierung kann alternativ oder zusätzlich einer Datenbank zur Speicherung zugeführt werden (nicht in der Figur dargestellt).

Figur 2 zeigt eine schematische Erläuterung der pipelineartigen Struktur der erfindungsgemäßen Vorrichtung des Produktionssystems 100. Die Elemente der Vorrichtung des Produktionssystems entsprechen denen aus Figur 1. Unterhalb des Blockschaltbilds der Vorrichtung des Produktionssystems 100 sind Sets von Eingangssignalen 102 zu unterschiedlichen Zeitpunkten $t_1$ - $t_4$ dargestellt. Zum Zeitpunkt $t_1$ liegt Set $n$ zur Bearbeitung in der Verknüpfungsstufe 120 vor. Set $n$+1 befindet sich in der Eingangsstufe 104. Eingangssignale 102 eines zuvor von der Verknüpfungsstufe bearbeiteten und ausgegebenen Set $n$-1 sind an die Perzeptronen 116 weitergereicht worden. Analog ist das von den Perzeptronen bearbeitete Set $n$-2 zur Analyse an die Analyseelemente 108 der Analysestufe 106 weitergereicht worden, und das Set $n$-3 von der Analysestufe 106 an die Ausgangsstufe 112, an deren Ausgang die Qualitätsklassifizierung für das Set n-3 bereitsteht.

Zum darauffolgenden Zeitpunkt $t_2$ liegt Set $n$ zur Bearbeitung in den Perzeptronen 116 vor. Alle anderen Sets sind ebenfalls in die jeweils nächste Stufe weitergeleitet worden. In der Eingangsstufe 102 befindet sich das nächste Set, Set $n$+2, für das in der Vorrichtung eine Qualitätsklassifizierung erfolgen soll.

Zum nächsten Zeitpunkt $t_3$ liegt Set $n$ zur Bearbeitung in der Analysestufe 106 vor. Alle anderen Sets sind wiederum in die jeweils nächste Stufe weitergeleitet worden. In der Eingangsstufe 102 befindet sich das nächste Set, Set $n$+3, für das in der Vorrichtung eine Qualitätsklassifizierung erfolgen soll.

Zum Zeitpunkt $t_4$ liegt Set $n$ zur Bearbeitung in der Ausgangsstufe 112 vor. Alle anderen Sets sind wiederum in die jeweils nächste Stufe weitergeleitet worden. In der Eingangsstufe 102 befindet sich das nächste Set, Set $n$+4, für das in der Vorrichtung des Produktionssystems eine Qualitätsklassifizierung erfolgen soll.

Die pipelineartige Parallel-Struktur der Vorrichtung des Produktionssystems ermöglicht eine quasi-kontinuierliche Qualitätsklassifizierung einer Folge von am Eingang zugeführten Sets von qualitätsrelevanten Eigenschaften repräsentierenden Signalen. Bei jedem Weitereichen eines Ergebnisses von einer Stufe zur nächsten werden am Eingang der Struktur neue Eingangssignale entgegengenommen und am Ausgang Ergebnisse ausgegeben so dass ein quasi-kontinuierlicher Strom an Qualitätsklassifizierungen vorliegt. Bei gleichartigen Erzeugnissen muss die Parametrierung der Perzeptronen oder anderer Teile der Struktur nur angepasst werden, wenn neue statistische Ergebnisse der Qualitätsklassifizierung dies nahelegen, geänderte Anforderungen an die Qualität vorliegen, oder wenn andere Erzeugnisse klassifiziert werden sollen.

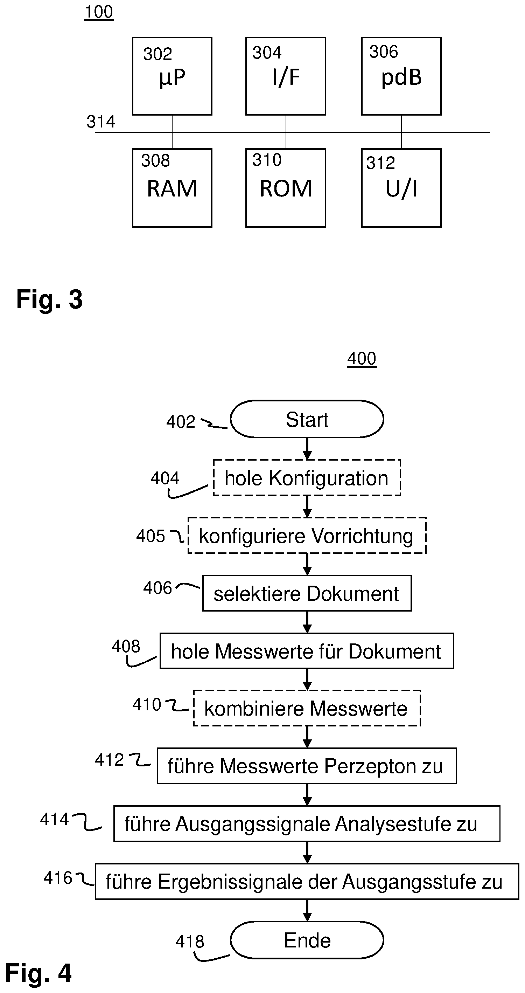

Figur 3 zeigt ein schematisches Blockschaltbild von Komponenten der erfindungsgemäßen Vorrichtung des Produktionssystems 100. Ein Mikroprozessor 302 ist mit einem Interface 304, einem programmierbaren digitalen Baustein 306, einem Arbeitsspeicher 308, einem nichtflüchtigen Speicher 310 und einer Benutzerschnittstelle 312 über einen Bus 314 kommunikativ verbunden. Bus 314 kann einen einzelnen physikalischen Bus umfassen, der einen oder mehrere logische Busse implementiert. Es ist aber auch möglich mehrere getrennte physikalische Busse oder Mischformen vorzusehen. Der programmierbare digitale Baustein 306 kann die Eingangsstufe 104, die Verknüpfungsstufe 120, die Perzeptronen 116, die Analysestufe 106 und/oder die Ausgangsstufe 112 sowie deren jeweiligen Elemente oder Einheiten implementieren. Interface 304 kann die Vorrichtung des Produktionssystems 100 mit Sensoren, welche Messwerte qualitätsrelevanter Eigenschaften erfassen und entsprechende Signale liefern, und/oder mit einer Datenbank, in welcher die Messwerte bzw. die entsprechenden Signale abrufbar gespeichert sind datentechnisch verbinden. Arbeitsspeicher 308 kann zur Initialisierung und/oder zum Betrieb der Vorrichtung durch den Mikroprozessor 302 benötigte Software-Instruktionen enthalten, sowie Signale oder Signalwerte zu unterschiedlichen Zeitpunkten und an unterschiedlichen Stufen der Bearbeitung. Der nichtflüchtige Speicher 310 kann Tabellenwerte zur Initialisierung der Vorrichtung des Produktionssystems 100 oder deren Elemente und Einheiten, sowie vom Mikroprozessor ausführbare Software-Instruktionen für die Initialisierung und den Betrieb der Vorrichtung des Produktionssystems enthalten. Benutzerschnittstelle 312 kann unter anderem ein Display sowie Mittel zum Empfang von Benutzereingaben und ähnliches umfassen.

Figur 4 zeigt ein schematisches Ablaufdiagramm der von der erfindungsgemäßen Vorrichtung des Produktionssystems 100 ausgeführten Schritte eines Verfahrens 400 zur Qualitätsklassifizierung, wobei das Verfahren 400 nicht Teil der vorliegenden Erfindung ist. Nach dem Start des Verfahrens kann die Vorrichtung des Produktionssystems zunächst noch nicht vollständig zur Qualitätsklassifizierung eingerichtet sein. Daher kann das Verfahren einen optionalen Schritt 404 des Lesens von zur Einrichtung der Vorrichtung des Produktionssystems benötigten Konfigurationsdaten, gefolgt von der Konfiguration der Vorrichtung des Produktionssystems in Schritt 405 umfassen. Konfigurationsdaten können Daten für eine vollständige Einrichtung eines programmierbaren digitalen Bausteins umfassen, d.h. Daten zur Einrichtung der Logikbausteine zur Implementierung der benötigten Funktionen. Wenn die Grundstruktur des programmierbaren digitalen Bausteins bereits vorliegt können die Konfigurationsdaten aber auch lediglich Parameter umfassen, mittels der die bereits vorliegenden Funktionen für die Qualitätsklassifizierung eines bestimmten Erzeugnisses parametrisiert werden. Die Parametrisierung kann bei unterschiedlichen Erzeugnissen unterschiedlich sein.

Nachdem die Vorrichtung des Produktionssystems eingerichtet und parametrisiert ist wird in Schritt 406 ein Erzeugnis ausgewählt, für welches eine Qualitätsklassifizierung durchgeführt werden soll. In Schritt 408 werden die zu diesem Erzeugnis gehörenden Messwerte geholt. Das Holen der Messwerte kann ein unmittelbares Anliegen von Sensorsignalen umfassen oder das Auslesen der Messwerte aus einer Datenbank oder dergleichen. Im optionalen Schritt 410 werden zwei oder mehr Messwerte miteinander arithmetisch kombiniert, sofern erforderlich, bevor sie den Perzeptronen in Schritt 412 zugeführt werden. Nachdem die Messwerte den in den jeweiligen Perzeptronen implementierten Funktionen unterworfen wurden, werden die Ausgangssignale in Schritt 414 der Analysestufe zugeführt. Die Ausgangssignale mehrerer Perzeptronen können dabei unterschiedlichen Fehlerklassen zugeordneten Analyseeinheiten zugeführt werden, wobei die Ausgangssignale der einer jeweiligen Fehlerklasse zugeordneten Perzeptronen summiert werden können, bevor sie der eigentlichen Analyseeinheit zugeführt werden. In der Analysestufe erfolgt eine nach Fehlerklassen getrennte Bewertung der Ausgangssignale, und es werden für jede Fehlerklasse Ergebnissignale an die Ausgangsstufe ausgegeben, Schritt 416.

Die Ausgangsstufe kombiniert die Ergebnissignale und gibt eine entsprechende Qualitätsklassifizierung aus. Das Verfahren kann nun für das nächste Erzeugnis beginnend mit Schritt 406 wiederholt oder, wenn kein weiteres Erzeugnis zu klassifizieren ist, beendet werden.

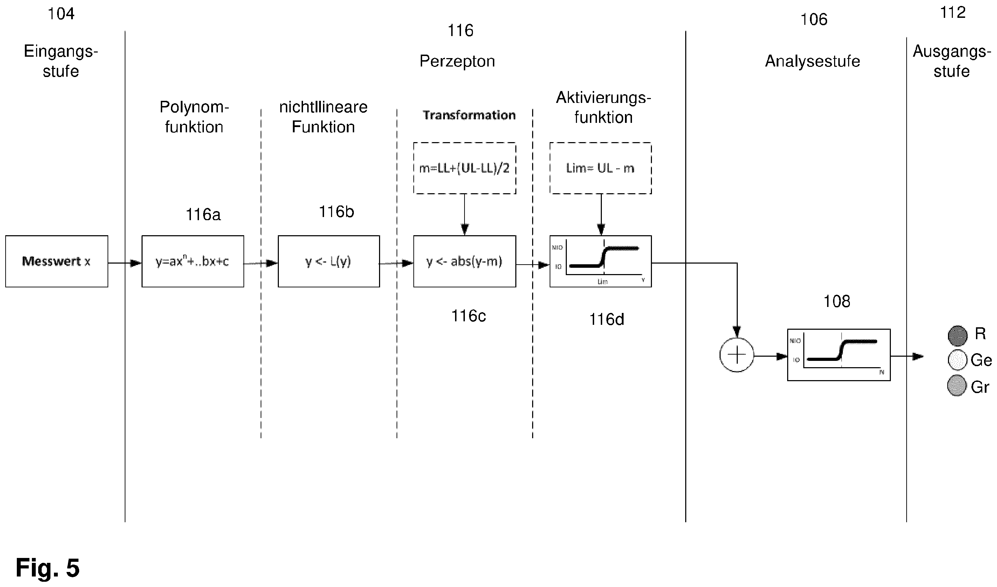

In Figur 5 ist eine exemplarische Darstellung des Wegs eines Eingangssignals durch die erfindungsgemäße Vorrichtung des Produktionssystems 100 gezeigt. Zunächst wird an der Eingangsstufe 104 ein Messwert x angelegt, welcher an das Perzeptron 116 weitergegeben wird. Das in der Figur beispielhaft dargestellte Perzeptron umfasst eine Polynomfunktion 116a, eine nichtlineare Funktion 116b, eine Transformation 116c und eine Aktivierungsfunktion 116d. Die Polynomfunktion 116a ist durch die Parameter a, b, c parametrisiert. Je nach Art des Messwerts bzw. Eingangssignals kann die Parametrisierung das Eingangssignal auch unverändert weiterleiten. In diesem Fall sind die Parameter a und c jeweils 0, und der Parameter b ist 1.

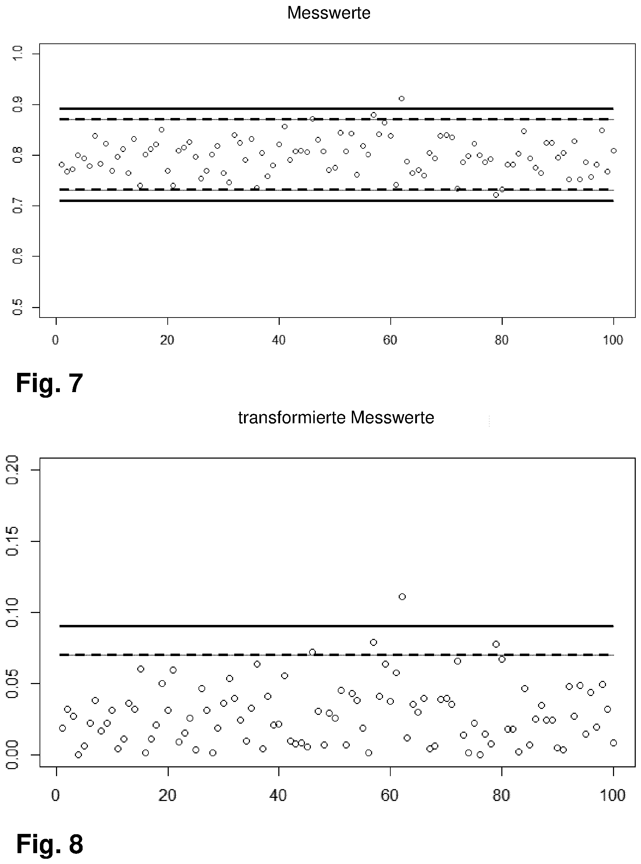

Eine Darstellung beispielhafter Messwerte ist in Figur 7 gezeigt. In der Figur sind Messwerte für eine Vielzahl von Messungen der Dicke eines Erzeugnisses, bspw. eines Druckerzeugnisses, gezeigt. Die Solldicke liegt bei einem Wert von 0.8, die größte zulässige Dicke liegt knapp unter 0.9, und die kleinste zulässige Dicke liegt knapp über 0.7, beides dargestellt durch die entsprechenden durchgezogenen Linien. Die Einheit ist für das Beispiel ohne Belang. Ungefähr 0.02 Einheiten unterhalb der größten und oberhalb der kleinsten zulässigen Dicke beginnt jeweils ein Warnbereich, dargestellt durch die gestrichelten Linien. In dem Beispiel können die Messwerte eine Vielzahl von Messungen an einem einzigen Erzeugnis repräsentieren, oder Messungen an einer Vielzahl von Erzeugnissen.

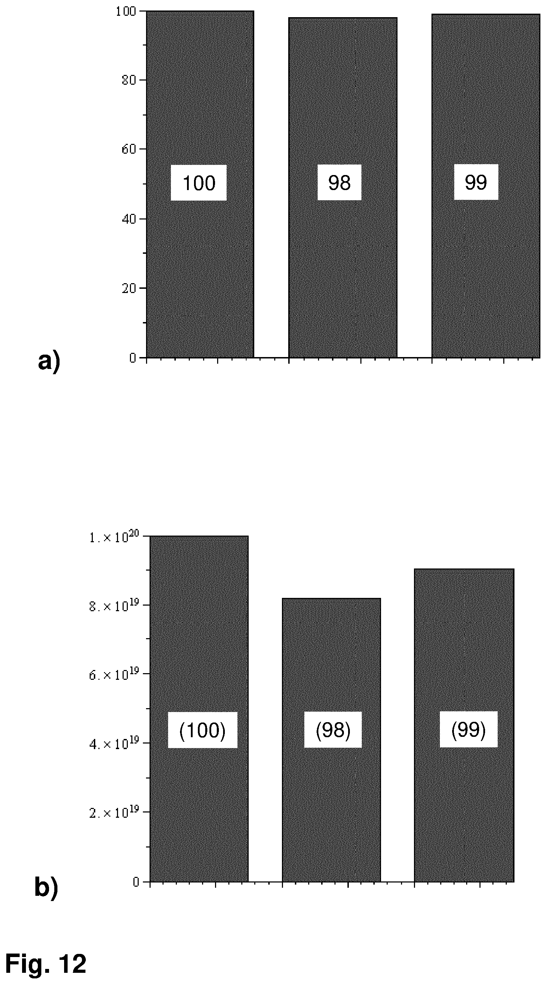

Der von der in Figur 5 dargestellten Polynomfunktion 116a bearbeitete Messwert bzw. das Eingangssignal kann nun der nichtlinearen Funktion 116b zugeführt werden, sofern diese auch als Link-Funktion bezeichnete Funktion für das entsprechende Eingangssignal definiert und konfiguriert bzw. parametrisiert ist. Die nichtlineare Funktion kann beispielsweise eine Exponentialfunktion oder andere nichtlineare Funktionen umfassen, welche lineare statistische Modelle nichtlinear abbildet. Figur 12 zeigt die Kontrastanhebung als ein Beispiel einer nichtlinearen Funktion. In Teil a) der Figur sind drei Messwerte aufgetragen, die von links nach rechts Werte von 100, 98 und 99 haben. Diese Werte liegen gemessen an der Größe der Werte sehr dicht beisammen. Eine Kontrastanhebung wie sie in Teil b) der Figur gezeigt ist weist dem Eingangswert 100 einen neuen Wert von $1*10^{20}$, dem Eingangswert 98 einen neuen Wert von $8*10^{19}$, und dem Eingangswert 99 einen neuen Wert von $9*10^{19}$ zu. Zu beachten ist, dass die Kontrastanhebung das Signal-Rauschverhältnis nicht verbessert.

Der von der in Figur 5 dargestellten nichtlinearen Funktion 116b bearbeitete Messwert kann nun einer Transformation 116c zugeführt werden, sofern diese für das entsprechende Eingangssignal definiert und konfiguriert bzw. parametrisiert ist. Bei dem in der Figur gezeigten Beispiel wird ein von einem unteren Grenzwert LL und einem oberen Grenzwert UL definierter Toleranz- oder Grenzbereich aus einem weiter von 0 entfernt liegenden Wertebereich in einen sich ab 0 in den positiven Zahlenraum erstreckenden Wertebereich transformiert. Dies dient unter anderem einer vereinfachten Bewertung der Messwerte, da diese nun nur noch anhand des Betrags ihrer Abweichung vom Sollwert bewertet werden müssen, wobei die Art der Abweichung, also kleiner oder größer als der Sollwert, keinen Einfluss mehr hat. Außerdem kann die zur Verfügung stehende Auflösung des Rechenwerks und der Register voll für die Darstellung des Toleranz- oder Grenzbereichs genutzt werden.

Die beispielhaften Messwerte aus Figur 7 sind von der Polynomfunktion 116a und der nichtlinearen Funktion 116b nicht verändert worden, sondern wurden unverändert der Transformation 116c zugeleitet. Figur 8 zeigt die transformierten Messwerte. Alle Messwerte sind nunmehr durch den Betrag ihrer Abweichung von dem Sollwert repräsentiert. Der Warnbereich und die Grenzwerte für die größe zulässige Abweichung sind wieder durch die gestrichelte bzw. die durchgezogene Linie dargestellt. Es ist sofort ersichtlich, dass aufgrund der Transformation nur noch die Annäherung an bzw. das Überschreiten eines Grenzwerts festgestellt werden muss. Außerdem liegen alle Werte in einem kleineren Bereich, der bei gegebener Bitbreite eines digitalen Rechenwerks entsprechend höher aufgelöst werden kann, oder bei gegebener Auflösung mit kleinerer Bitbreite darstellbar ist.

Die transformierten Messwerte werden der in Figur 5 dargestellten Aktivierungsfunktion 116d zugeführt, bspw. einer Sigmoid-Funktion mit einem an dem Wert Lim liegenden Wendepunkt. Der Wert Lim zeigt in dem Beispiel den Rand des Toleranzbereichs an, er kann je nach Anforderung auch so gewählt werden, dass er bei anderen Werten liegt. Ebenso kann die Steilheit der Sigmoid-Funktion abhängig von den jeweiligen Anforderungen anders gewählt sein. Die Aktivierungsfunkton weist Werten, die in der Nähe des Sollwerts liegen einen Wert in der Nähe von 0 zu, wobei bei Annäherung an einen der Grenzwerte des Toleranzbereichs der zugewiesene Wert rapide ansteigt und bei Überschreiten eines Grenzwerts des Toleranzbereichs schnell gegen den Maximalwert strebt. Die beispielhafte Funktion folgt der allgemeinen Formel

$$Ausgangssignal = \frac{1}{1 + e^{\frac{y - Lim}{s}}}$$

In dem in der Figur gezeigten Beispiel können die beiden Extremwerte der von der Aktivierungsfunktion zugewiesenen Werte die binäre Bedeutung "in Ordnung" bzw. "nicht in Ordnung" haben.

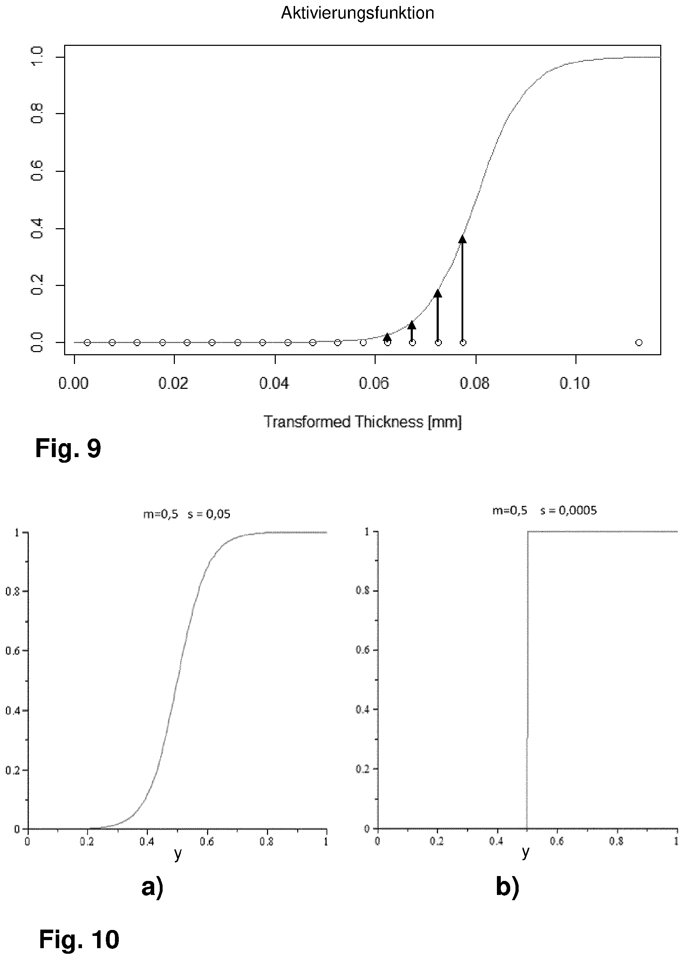

Die Zuordnung von Ausgangswerten zu Eingangswerten in der Aktivierungsfunktion ist in Figur 9 beispielhaft für die in Figur 7 dargestellten Messwerte gezeigt. Auf der x-Achse ist die Abweichung der Messwerte vom Sollwert angegeben, auf der y-Achse sind die den Messwerten entsprechend der Aktivierungsfunktion zuzuweisenden Ausgangswerte abzulesen. Es ist deutlich zu erkennen, dass Werten weit unterhalb des Warnbereichs, der ungefähr bei einer Abweichung von 0.07 Einheiten beginnt, ein Ausgangswert von 0 oder nahe bei 0 zugewiesen wird. Bei Annäherung der Abweichung an den Warnbereich werden zunehmend größere Werte zugewiesen, bis bei Erreichen der größten zulässigen Abweichung ein Wert von 0.5 zugewiesen wird.

Alle darüber liegenden Werte erhalten schnell gegen einen Wert von 1 ansteigende Ausgangswerte. Die Breite des Warnbereichs kann mit den Parametern der Funktion

$$f(y) = \frac{1}{1 + e^{-\frac{y-m}{s}}}$$

welche die in Figur 9 dargestellte beispielhafte Aktivierungsfunktion allgemein beschreibt, angepasst werden. Figur 10 a) und b) zeigen weitere beispielhafte Aktivierungsfunktionen mit unterschiedlichen Steigungen im Wendepunkt. Die Breite des sich daraus ergebenden Warnbereichs ist leicht vorstellbar. Die noch innerhalb des Toleranzbereichs, aber im Warnbereich liegenden Messwerte erhalten durch die Aktivierungsfunktion ein höheres Gewicht, das bei der Qualitätsklassifizierung entsprechend berücksichtigt wird.

Der Ausgangswert der in Figur 5 gezeigten Aktivierungsfunktion 116d wird in dem Beispiel einem Summierer zugeführt, dem auch Ausgangswerte anderer Perzeptronen zugeführt sein können. Hierdurch können bspw. in mehreren Perzeptronen "vorbewertete" Messwerte zu einem Wert zusammengefasst werden, der dann von einer einzigen Analyseeinheit bewertet wird. Zweckmäßigerweise gehören die zusammengefassten "vorbewerteten" Messwerte derselben Fehlerklasse an.

Die Einteilung in Fehlerklassen ermöglicht es, unterschiedliche Anzahlen von unterschiedlich schwer wiegenden Fehlern als "noch gut" zuzulassen. Erst wenn die Summe der Fehler in einer Fehlerklasse den noch zulässigen Wert überschreitet wird dies als Ausschlusskriterium an die Ausgangsstufe 112 weitergegeben.

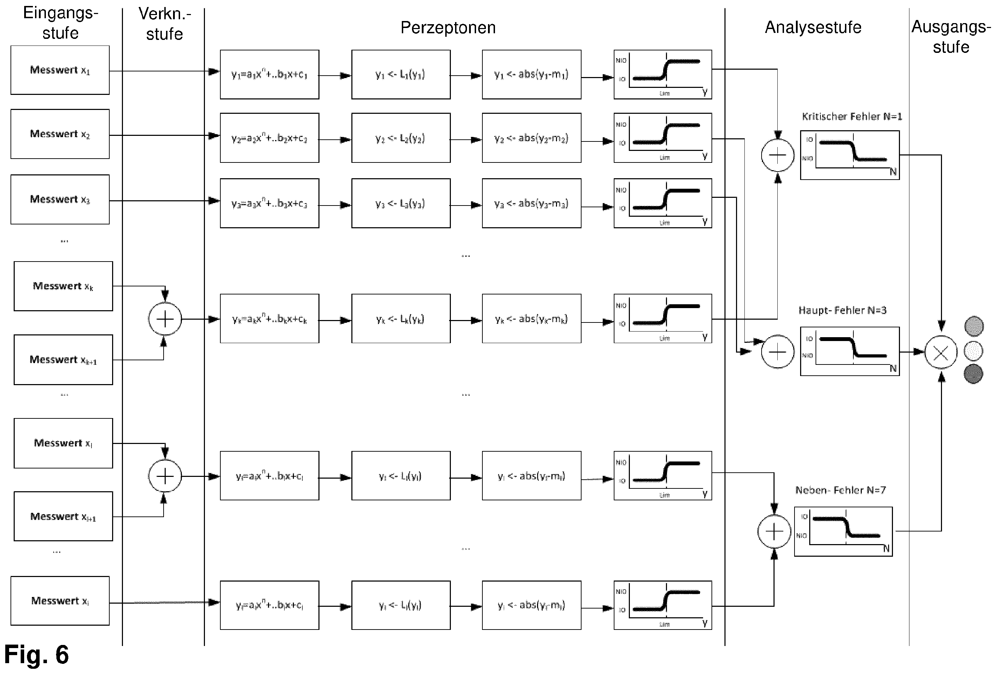

Figur 6 zeigt eine beispielhafte Vorrichtung des Produktionssystems mit mehreren Eingangssignalen sowie deren Weg durch die unterschiedlichen Bearbeitungsstufen. Die Bearbeitung in den Perzeptronen wurde bereits mit Bezug auf Figur 5 detailliert beschrieben und wird an dieser Stelle nicht wiederholt.

Deutlich erkennbar ist die Kombination mehrerer Eingangssignale in der Verknüpfungsstufe, und die Zusammenführung der Ausgangssignale mehrerer Perzeptronen zu jeweiligen bestimmten Fehlerklassen zugeordneten Analyseeinheiten der Analysestufe. In dem Beispiel sind Fehler in kritische Fehler, Haupt-Fehler und Neben-Fehler eingeteilt. Es darf nur ein kritischer Fehler auftreten, wohingegen bis zu 3 Haupt-Fehler und 7 Neben-Fehler zulässig sind. Der besseren Übersichtlichkeit halber sind den einzelnen in der Figur gezeigten Analyseeinheiten jeweils nur zwei Ausgangssignale von Perzeptronen zugeführt. Es ist leicht erkennbar, dass die Zahl der den jeweiligen Analyseeinheiten zugeführten Ausgangssignale von der Art und der Zahl der Eingangssignale anhängt und frei wählbar ist. Zu beachten ist, dass je nach der Steilheit der Aktivierungsfunktion die Ausgangswerte der Perzeptronen auch Werte zwischen 0 und 1 annehmen können, so dass aufgrund der Addition der Ausgangssignale der Perzeptronen in der Analysestufe auch vier oder mehr jeweils für sich als "noch gut" oder als in einem Warnbereich liegend vorbewertete Einzelmesswerte einer Fehlerklasse dazu führen können, dass die entsprechende Analyseeinheit an ihrem Ausgang ein in bei 0 liegendes Ergebnissignal ausgibt. Die Invertierung der hierzu verwendeten Sigmoid-Funktion gegenüber den in den Perzeptronen verwendeten wurde wegen der für die Schlussbewertung verwendeten Funktion gewählt:

$$Bewertung = \frac{1}{\left(1 + e^{\frac{N_{krit}-1}{s_{krit}}}\right) * \left(1 + e^{\frac{N_{haupt}-3}{s_{haupt}}}\right) * \left(1 + e^{\frac{N_{neben}-7}{s_{neben}}}\right)}$$

mit

$N_{krit}$ = Summenwert für Ergebnissignale der Messwerte, die zu einem kritischen Fehler führen. Im Beispiel ist maximal 1 kritischer Fehler zulässig.

$N_{haupt}$ = Summenwert für Ergebnissignale der Messwerte, die zu einem Haupt-Fehler führen. Im Beispiel sind maximal 3 Haupt-Fehler zulässig.

$N_{neben}$ = Summenwert für Ergebnissignale der Messwerte, die zu einem Neben-Fehler führen. Im Beispiel sind maximal 7 Neben-Fehler zulässig.

$S_{krit}$ = Steilheit der Sigmoidfunktion für kritische Fehler im Übergangsbereich

$S_{haupt}$ = Steilheit der Sigmoidfunktion für Haupt-Fehler im Übergangsbereich

$S_{neben}$ = Steilheit der Sigmoidfunktion für Neben-Fehler im Übergangsbereich

Die invertierten Produktterme entsprechen den jeweiligen Fehlerklassen zugeordneten Analyseeinheiten der Analysestufe, die Multiplikation erfolgt in der Ausgangsstufe. Sobald für einen der Produktterme im Nenner der Summenwert der Ergebnissignale größer wird als die zulässige Fehlergröße strebt der Produktterm gegen einen großen Wert. Bei Summenwerten die kleiner als die zulässige Fehlergröße sind strebt er gegen 0. Aufgrund der Addition von 1 ist jeder der Produktterme stets gleich oder größer als 1. Wegen der Multiplikation der Produktterme ist das Produkt im Nenner nur dann ungefähr 1, wenn alle Produktterme einen Wert von ungefähr 1 haben. Sobald einer der Produktterme einen Wert hat, der deutlich von 1 abweicht, wird das Ergebnis der Bewertung deutlich kleiner als 1, was in diesem Beispiel als "nicht in Ordnung" gewertet wird:

Wenn Bewertung ~ 1: Erzeugnis ist in Ordnung
Wenn Bewertung ~ 0: Erzeugnis ist nicht in Ordnung

In einem Zwischenbereich kann eine manuelle Kontrolle erfolgen.

Die in dem Beispiel vorgestellte dreistufige Qualitätsklassifizierung kann auch in den Farben einer Verkehrsampel dargestellt werden, also grün für "in Ordnung", rot für "nicht in Ordnung" und gelb für "manuelle Kontrolle".

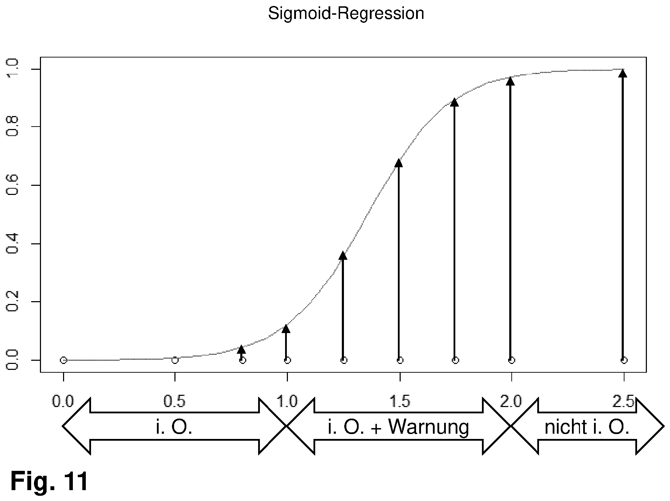

Figur 11 zeigt ein weiteres Beispiel einer Aktivierungsfunktion eines Perzeptrons, anhand derer Abweichungen von Messwerten von einem Sollwert ein Wert für das resultierende Ausgangssignal zugewiesen wird. Anhand der in der Figur dargestellten Funktion soll im Folgenden der Einfluss der Bewertung der Ausgangssignale der Perzeptronen in der Analysestufe auf die resultierende Qualitätsklassifizierung beispielhaft erläutert werden.

Bei einem beispielhaften Erzeugnis führen außerhalb der Toleranz liegende Abweichungen einer gemessenen Dicke zu kritischen Fehlern, während Messungen eines anderen Messwerts an drei unterschiedlichen Positionen anhand der in Figur 11 dargestellten Aktivierungsfunktion in Ausgangswerte umgesetzt werden.

Die folgende Tabelle zeigt Messwerte und resultierende Ausgangsignale sowie den jeweils zugeordneten Fehlertyp für ein erstes Erzeugnis:

|  | Messwert | Ausgangssignal | Fehlertyp |
|---|---|---|---|
| Dicke | 0.8 | 0 | kritisch |
| Position 1 | 0.1 | 0 | Hauptfehler |
| Position 2 | 0.1 | 0 | Hauptfehler |
| Position 3 | 0.1 | 0 | Hauptfehler |
| Qualitätsklassifizierung |  | 1 -> i. O. |  |

Die Bewertung der Dicke ist nicht anhand der in Figur 11 dargestellten Aktivierungsfunktion vorgenommen, sondern bspw. anhand derer aus Figur 9. Die gemessene Dicke von 0.8 liegt exakt auf dem Sollwert und führt somit zu einem Ausgangssignal mit dem Wert 0. Der Produktterm für die Fehlerklasse "kritischer Fehler" der für die Schlussbewertung eingesetzten Funktion ergibt ungefähr 1.

Die Messwerte für die Positionen 1, 2 und 3 führen nach Anwendung der Aktivierungsfunktion aus Figur 11 ebenfalls zu Ausgangssignalen mit Werten jeweils von 0. Die Addition der Ausgangssignale der Positionen 1, 2 und 3 ergibt 0. Der Produktterm für die Fehlerklasse "Hauptfehler" der für die Schlussbewertung eingesetzten Funktion ergibt ebenfalls ungefähr 1.

Wenn keine Nebenfehler aufgetreten sind oder diese Fehlerklasse nicht definiert ist ergibt die Bewertung einen Wert von ungefähr 1, was einer Qualitätsklassifizierung "in Ordnung" oder "gut" entspricht.

Für ein zweites Erzeugnis liegen folgende Messwerte und Ausgangssignale vor:

|  | Messwert | Ausgangssignal | Fehlertyp |
|---|---|---|---|
| Dicke | 0.9 | 1 | Kritisch |
| Position 1 | 0.1 | 0 | Hauptfehler |
| Position 2 | 0.1 | 0 | Hauptfehler |
| Position 3 | 0.1 | 0 | Hauptfehler |
| Qualitätsklassifizierung |  | 0.5 -> nicht i. O. |  |

Hier ergibt die Beurteilung der Messwerte für die Positionen 1, 2 und 3 keinen Fehler. Der Messwert für die Dicke ist jedoch außerhalb der Toleranz und führt für das Ausgangssignal zu einem Wert 1 (siehe Figur 9, Abweichung = 0.1). Damit nimmt der Produktterm für kritische Fehler der für die Schlussbewertung eingesetzten Funktion einen Wert von 2 an, und das Bewertungsergebnis liegt im besten Fall bei 0.5. Je nach Vorgabe kann dies als "nicht in Ordnung" gewertet werden, oder zumindest eine manuelle Nachkontrolle auslösen.

Für ein drittes Erzeugnis liegen folgende Messwerte und Ausgangssignale vor:

|  | Messwert | Ausgangssignal | Fehlertyp |
|---|---|---|---|
| Dicke | 0.8 | 0 | Kritisch |
| Position 1 | 1.5 | 0.6 | Hauptfehler |
| Position 2 | 0.1 | 0 | Hauptfehler |
| Position 3 | 0.1 | 0 | Hauptfehler |
| Qualitätsklassifizierung |  | ~1 -> i. O. |  |

Hier liegt kein kritischer Fehler vor, der Produktterm für den kritischen Fehler hat einen Wert von ungefähr 1. Allerdings führt der Messwert für Position 1 entsprechend der Aktivierungsfunktion aus Figur 11 zu einem Ausgangssignal von 0.6. Für die Positionen 2 und 3 sind die Ausgangssignale 0. Der Produktterm für den Hauptfehler liegt damit immer noch in der Nähe von 1, so dass die Qualitätsklassifizierung ebenfalls einen in der Nähe von 1 liegenden Wert annimmt, also das Erzeugnis als "in Ordnung" oder "gut" bewertet wird.

Für ein viertes Erzeugnis liegen folgende Messwerte und Ausgangssignale vor:

|  | Messwert | Ausgangssignal | Fehlertyp |
|---|---|---|---|
| Dicke | 0.8 | 0 | Kritisch |
| Position 1 | 2.0 | 1 | Hauptfehler |
| Position 2 | 2.1 | 1 | Hauptfehler |
| Position 3 | 0.1 | 0 | Hauptfehler |
| Qualitätsklassifizierung |  | -1 -> i. O. |  |

Hier liegt wiederum kein kritischer Fehler vor, der Produktterm für den kritischen Fehler hat einen Wert von ungefähr 1. Allerdings führen die Messwerte für Positionen 1 und 2 entsprechend der Aktivierungsfunktion aus Figur 11 jeweils zu einem Ausgangssignal von ungefähr 1. Für die Position 3 ist das Ausgangssignal 0. Der Produktterm für den Hauptfehler liegt damit immer noch in der Nähe von 1, so dass die Qualitätsklassifizierung ebenfalls einen in der Nähe von 1 liegenden Wert annimmt, also das Erzeugnis als "in Ordnung" oder "gut" bewertet wird.

Für ein fünftes Erzeugnis liegen folgende Messwerte und Ausgangssignale vor:

|  | Messwert | Ausgangssignal | Fehlertyp |
|---|---|---|---|
| Dicke | 0.8 | 0 | Kritisch |
| Position 1 | 2.1 | 1 | Hauptfehler |
| Position 2 | 2.2 | 1 | Hauptfehler |
| Position 3 | 2.0 | 1 | Hauptfehler |
| Qualitätsklassifizierung |  | 0.5 -> nicht i. O. |  |

Hier liegt wiederum kein kritischer Fehler vor, der Produktterm für den kritischen Fehler hat einen Wert von ungefähr 1. Allerdings führen die Messwerte für Positionen 1, 2 und 3 entsprechend der Aktivierungsfunktion aus Figur 11 jeweils zu einem Ausgangssignal von ungefähr 1. Damit liegen drei Hauptfehler vor und der Produktterm für kritische Fehler der für die Schlussbewertung eingesetzten Funktion nimmt einen Wert von 2 an, so dass das Bewertungsergebnis im besten Fall bei 0.5 liegt. Je nach Vorgabe kann dies als "nicht in Ordnung" gewertet werden, oder zumindest eine manuelle Nachkontrolle auslösen.

Die Ablaufpläne und die Blockschaubilder in den vorangehend erläuterten Figuren veranschaulichen die Struktur, die Funktionalität und die Funktionsweise möglicher Ausführungsarten von Vorrichtungen des Produktionssystems gemäß verschiedenen Ausführungsformen der vorliegenden Erfindung. Diesbezüglich kann jeder Block in dem Ablaufplan oder in den Blockschaubildern ein Modul, ein Segment oder ein Teil eines Codes veranschaulichen, der eine oder mehrere ausführbare Anweisungen zum Umsetzen der angegebenen Funktion(en) umfasst. Ferner wird darauf hingewiesen, dass jeder Block der Blockschaubilder und/oder des dargestellten Ablaufplans und Kombinationen von Blöcken in den Blockschaubildern und/oder dem dargestellten Ablaufplan durch spezialisierte Hardwaresysteme, die die angegebenen Funktionen oder Aktionen oder Kombinationen ausführen, oder durch Kombinationen von spezialisierter Hardware und Computeranweisungen umgesetzt werden kann.

**Bezugszeichenliste**

| | |
|---|---|
| 100 | Vorrichtung des Produktionssystems |
| 102 | Eingangssignal |
| 104 | Eingangsstufe |
| 106 | Analysestufe |
| 108 | Analyseeinheit |
| 110 | Ergebnissignal |
| 112 | Ausgangsstufe |
| 114 | Ausgang |
| 116 | Perzeptron |
| 116a | Polynomfunktion |
| 116b | nichtlineare Funktion |
| 116c | Transformation |
| 116d | Aktivierungsfunktion |
| 118 | Ausgangssignal |
| 120 | Verknüpfungsstufe |
| 122 | Kombinationseinheit |
| 124 | Umsetzer |
| 302 | Prozessor |
| 304 | Schnittstelle |
| 306 | programmierbarer digitaler Baustein |
| 308 | Arbeitsspeicher |
| 310 | nichtflüchtiger Speicher |
| 312 | Benutzerschnittstelle |
| 314 | Bus / Bussystem |
| 400 | Verfahren |
| 402-418 | Verfahrensschritte |

**Patentansprüche**

1.  Produktionssystem für individuell unterscheidbare Dokumente gleicher Art, wobei es sich bei den Dokumenten um Sicherheitsdokumente handelt, mit einer Vorrichtung (100) zur automatischen Klassifizierung von Dokumenten, **dadurch gekennzeichnet, dass** die Klassifizierung eine Qualitätsklassifizierung ist, wobei das Produktionssystem die Vorrichtung zur Qualitätsklassifizierung an unterschiedlichen Stellen des Herstellungsprozesses aufweist, und dazu eingerichtet ist, zumindest bei einer Qualitätsklassifizierung, die ein Verwerfen eines bestimmten Dokuments anzeigt, den Herstellprozess für das bestimmte Dokument erneut zu starten, wobei die Qualitätsklassifizierung durch eine Vorrichtung ermittelt wird, und in Abhängigkeit von der ermittelten Qualitätsklassifizierung die Prozessparameter, wie Herstellrate oder die Anzahl von Messungen an jedem Produkt, über einen bestimmten, vorzugsweise unmittelbar zurückliegenden Zeitraum angepasst werden;
    dadurch gekennzeichet, dass die Vorrichtung des Produktionssystems folgendes umfasst:

    - eine zum parallelen Empfangen einer Vielzahl von Messwerte qualitätsrelevanter Eigenschaften eines Dokuments repräsentierenden Eingangssignalen (102) eingerichtete Eingangsstufe (104), wobei die qualitätsrelevanten Eigenschaften die Abmessungen eines Erzeugnisses, die Gleichmäßigkeit bzw. Lückenlosigkeit eines Farbauftrags oder einer Versiegelung, eines Farbumfangs, die Gleichmäßigkeit der Oberfläche und der Kanten, die Rauheit oder Reflexionseigenschaften einer Oberfläche, die Position, Erkennbarkeit, Lesbarkeit und/oder die Qualität des Druckbildes von Text, Schriftzügen, und/oder Sicherheitsmerkmalen umfassen
    - eine Analysestufe (106) mit einer Analyseeinheit (108), oder mehreren, unterschiedlichen Fehlerklassen zugeordneten Analyseeinheiten (108), wobei jede Analyseeinheit (108) jeweils ein Ergebnissignal (110) ausgibt,
    - eine Ausgangsstufe (112), welche dazu eingerichtet ist, Ergebnissignale (110) der Analysestufe (106) in eine mindestens zweistufige Qualitätsklassifizierung umzusetzen und an einem Ausgang (114) auszugeben, und
    - mehrere zwischen der Eingangsstufe (104) und der Analysestufe (106) parallel angeordnete Perzeptronen (116), wobei jedes Perzeptron (116) eine oder mehrere Logikschaltungen oder -funktionen umfasst, welche eine oder eine Abfolge von Polynomfunktionen (116a) und/oder nichtlinearen Funktionen (116b), Transformationen (116c) und/oder Aktivierungsfunktionen (116d) repräsentieren, die an die von dem jeweiligen Eingangssignal (102) repräsentierte Eigenschaft angepasst konfigurierbar sind und denen ein dem Perzeptron (116) von der Eingangsstufe (104) zugeführtes Eingangssignal (102) unterworfen wird, und wobei ein Ausgangssignal (118) eines jeden Perzeptrons (116) einer Analyseeinheit (108) der Analysestufe (106) zugeführt ist.

2. Produktionssystem nach Anspruch 1, **dadurch gekennzeichnet, dass** zwischen der Eingangsstufe (104) und einem Perzeptron (116) eine Verknüpfungsstufe (120) angeordnet ist, welche eine oder mehrere Kombinationseinheiten (122) aufweist, die zwei oder mehrere Eingangssignale (102) arithmetisch kombinieren und als ein Eingangssignal dem Perzeptron (116) zuführen.

3. Produktionssystem nach Anspruch 1 oder 2, **dadurch gekennzeichnet, dass** die Logikschaltungen der Perzeptronen (116) in einer Pipeline-Architektur implementiert sind.

4. Produktionssystem nach einem der vorhergehenden Ansprüche,
**dadurch gekennzeichnet, dass** eine die Eingangsstufe (104), die Verknüpfungsstufe (120), die Analysestufe (106), die Ausgangsstufe (112) und/oder die Perzeptronen (116), deren jeweilige Beziehungen zueinander, sowie Schnittstellen repräsentierende Beschreibung in einem Konfigurationsspeicher auslesbar abgelegt ist, welche initial in einen programmierbaren digitalen Baustein (306) ladbar ist und dessen Logikelemente konfiguriert, wobei der digitale Baustein ein Field Programmable Gate Array, FPGA, oder ein Complex Programmable Logic Device, CPLD, umfasst.

5. Produktionssystem nach Anspruch 4, **dadurch gekennzeichnet, dass** die Anwendung der Polynomfunktionen und/oder der nichtlinearen Funktionen auf die Eingangssignale Zugriffe auf entsprechende Look-up-Tabellen umfasst.

6. Produktionssystem nach Anspruch 5, **dadurch gekennzeichnet, dass** zumindest Teile der Look-up-Tabellen in einem außerhalb des programmierbaren digitalen Bausteins (306) angeordneten Parameterspeicher auslesbar speicherbar sind, und wobei der programmierbare digitale Baustein (306) eine Schnittstelle zum Zugriff auf den Parameterspeicher aufweist.

7. Produktionssystem nach einem der vorhergehenden Ansprüche 1-6,
**dadurch gekennzeichnet, dass** die Qualitätsklassifizierung ein Identifikationsmerkmal eines Dokuments enthält oder mit einem solchen verknüpft ist.

8. Produktionssystem nach einem der vorhergehenden Ansprüche 1-7,
**dadurch gekennzeichnet, dass** die Vorrichtung zur Qualitätsklassifizierung das Ergebnis der Klassifizierung signiert, und das Produktionssystem dazu eingerichtet ist, vor der erneuten Herstellung die Signatur der Klassifizierung zu prüfen.

**Claims**

1. A production system for individually distinguishable documents of the same kind, wherein the documents are security documents, comprising a device (100) for automatically classifying documents, **characterised in that** the classification is a quality classification, wherein the production system has the device for quality classification at different points of the manufacturing process and, in the event of a quality classification that indicates a rejection of a specific document, is configured to re-start the manufacturing process for the specific document, wherein the quality classification is determined by a device and the process parameters, such as manufacturing rate or the number of measurements on each product, are adapted over a specific, preferably directly preceding time period depending on the determined quality classification;
**characterised in that** the device of the production system comprises the following:

- an input stage (104), which is configured to receive, in parallel, a plurality of input signals (102) representing measurement values of quality-relevant properties of a document, wherein the quality-relevant properties comprise the dimensions of a product, the uniformity or completeness of a colour application or a sealing, a colour range, the uniformity of the surface and of the edges, the roughness or reflection properties of a surface, the position, identifiability, legibility and/or the quality of the print image of text, lettering and/or security features,
- an analysis stage (106) with one analysis unit (108) or a plurality of analysis units (108) associated with different error classes, wherein each analysis unit (108) outputs its own result signal (110),

- an output stage (112), which is configured to convert result signals (110) of the analysis stage (106) into an at least two-stage quality classification and to output same at an output (114), and

- a plurality of perceptrons (116) arranged in parallel between the input stage (104) and the analysis stage (106), wherein each perceptron (116) comprises one or more logic circuits or functions, which represent one or a sequence of polynomial functions (116a) and/or non-linear functions (116d), transformations (116c) and/or activation functions (116d), which are configurable adapted to the property represented by the respective input signal (102) and which are subjected to an input signal (102) fed to the perceptron (116) from the input stage (104), and wherein an output signal (118) of each perceptron (116) is fed to an analysis unit (108) of the analysis stage (106).

2. The production system according to claim 1, **characterised in that** a linking stage (120) is arranged between the input stage (104) and a perceptron (116), which linking stage has one or more combination units (122) which combine two or more input signals (102) arithmetically and feed them as an input signal to the perceptron (116).

3. The production system according to claim 1 or 2, **characterised in that** the logic circuits of the perceptrons (116) are implemented in a pipeline architecture.

4. The production system according to any one of the preceding claims, **characterised in that** a description representing the input stage (104), the linking stage (120), the analysis stage (106), the output stage (112) and/or the perceptrons (116), their respective relationships to one another, and interfaces is stored in readable fashion in a configuration memory and is initially loadable into a programmable digital module (306) and configures the logic elements thereof, wherein the digital module comprises a field programmable gate array, FPGA, or a complex programmable logic device, CPLD.

5. The production system according to claim 4, **characterised in that** the application of the polynomial functions and/or the non-linear functions to the input signals comprises access to corresponding look-up tables.

6. The production system according to claim 5, **characterised in that** at least parts of the look-up tables are storable in readable fashion in a parameter memory arranged outside the programmable digital module (306), and wherein the programmable digital module (306) has an interface for access to the parameter memory.

7. The production system according to one of preceding claims 1-6, **characterised in that** the quality classification contains an identification feature of a document or is linked to such a feature.

8. The production system according to one of preceding claims 1-7, **characterised in that** the device for quality classification signs the result of the classification, and the production system is configured to check the signature of the classification prior to renewed manufacturing.

**Revendications**

1. Système de production de documents pouvant être distingués individuellement du même type, dans lequel les documents sont des documents de sécurité, comprenant un dispositif (100) pour classer automatiquement des documents, **caractérisé en ce que** la classification est une classification de qualité, dans lequel le système de production a le dispositif de classification de qualité en différents points du processus de fabrication et, dans le cas d'une classification de qualité indiquant un rejet d'un document spécifique, et configuré pour redémarrer le processus de fabrication du document spécifique, dans lequel la classification de qualité est déterminée par un dispositif et les paramètres de processus, tels que le taux de fabrication ou le nombre de mesures de chaque produit, sont adaptés sur une période spécifique, préférentiellement directement précédente, en fonction de la classification de qualité déterminée ;

**caractérisé en ce que** le dispositif du système de production comprend ce qui suit :

- un stade d'entrée (104), qui est configuré pour recevoir, en parallèle, une pluralité de signaux d'entrée (102) représentant des valeurs de mesure de propriétés pertinentes pour la qualité d'un document, dans lequel les propriétés pertinentes pour la qualité comprennent les dimensions d'un produit, l'uniformité ou la complétude d'une application de couleur ou d'une étanchéification, une plage de couleur, l'uniformité de la surface et des bords, la rugosité ou les propriétés de réflexion d'une surface, la position, la capacité d'identification, la lisibilité et/ou la qualité de l'image d'impression du texte, du lettrage et/ou des caractéristiques de sécurité,
- un stade d'analyse (106) avec une unité d'analyse (108) ou une pluralité d'unités d'analyse (108) associées à différentes classes d'erreur, dans lequel chaque unité d'analyse (108) émet son propre signal de résultat (110),
- un stade de sortie (112), qui est configuré pour convertir les signaux de résultats (110) du stade d'analyse (106) en une classification de qualité en au moins deux stades et pour émettre ces derniers au niveau d'une sortie (114), et
- une pluralité de perceptrons (116) agencés en parallèle entre le stade d'entrée (104) et le stade d'analyse (106), dans lequel chaque perceptron (116) comprend un ou plusieurs circuits ou fonctions logiques, qui représentent une ou une séquence de fonctions polynomiales (116a) et/ou de fonctions non linéaires (116d), de transformations (116c) et/ou de fonctions d'activation (116d), qui peuvent être configurées de manière adaptée à la propriété représentée par le signal d'entrée (102) respectif et qui sont soumises à un signal d'entrée (102) introduit dans le perceptron (116) depuis le stade d'entrée (104), et dans lequel un signal de sortie (118) de chaque perceptron (116) est introduit dans une unité d'analyse (108) du stade d'analyse (106).

2. Système de production selon la revendication 1,
**caractérisé en ce qu'**un stade de liaison (120) est agencé entre le stade d'entrée (104) et un perceptron (116), lequel stade de liaison a une ou plusieurs unités de combinaison (122) qui combinent deux signaux d'entrée (102) ou plus de manière arithmétique et les introduisent sous forme de signal d'entrée dans le perceptron (116).

3. Système de production selon la revendication 1 ou 2,
**caractérisé en ce que** les circuits logiques des perceptrons (116) sont mis en œuvre dans une architecture en pipeline.

4. Système de production selon l'une quelconque des revendications précédentes, **caractérisé en ce qu'**une description représentant le stade d'entrée (104), le stade de liaison (120), le stade d'analyse (106), le stade de sortie (112) et/ou les perceptrons (116), leurs relations respectives les uns avec les autres, et les interfaces est stockée d'une façon lisible dans une mémoire de configuration et peut initialement être chargée dans un module numérique programmable (306) et configure les éléments logiques de celui-ci, dans lequel le module numérique comprend un ensemble de portes programmables de champ, ou FGPA, ou un dispositif logique programmable complexe, ou CPLD.

5. Système de production selon la revendication 4,
**caractérisé en ce que** l'application des fonctions polynomiales et/ou des fonctions non linéaires aux signaux d'entrée comprend l'accès aux tableaux de correspondance correspondants.

6. Système de production selon la revendication 5,
**caractérisé en ce qu'**au moins des parties des tableaux de correspondance peuvent être stockées de façon lisible dans une mémoire de paramètres agencée à l'extérieur du module numérique programmable (306), et dans lequel le module numérique programmable (306) a une interface d'accès à la mémoire de paramètres.

7. Système de production selon l'une des revendications 1 à 6 précédentes, **caractérisé en ce que** la classification de qualité contient une caractéristique d'identification d'un document ou est liée à une telle caractéristique.

8. Système de production selon l'une des revendications 1 à 7 précédentes, **caractérisé en ce que** le dispositif de classification de qualité signe le résultat de la classification, et le système de production est configuré pour contrôler la signature de la classification avant une fabrication renouvelée.

**Fig. 1**

**Fig. 2**

100

| 302 µP | 304 I/F | 306 pdB |
| 308 RAM | 310 ROM | 312 U/I |

314

## Fig. 3

400

402 — Start

404 — hole Konfiguration

405 — konfiguriere Vorrichtung

406 — selektiere Dokument

408 — hole Messwerte für Dokument

410 — kombiniere Messwerte

412 — führe Messwerte Perzepton zu

414 — führe Ausgangssignale Analysestufe zu

416 — führe Ergebnissignale der Ausgangsstufe zu

418 — Ende

## Fig. 4

| 104 | | | 116 | | | 106 | 112 |
|---|---|---|---|---|---|---|---|

**Eingangs-stufe**

**Perzepton**

**Analysestufe**

**Ausgangs-stufe**

Polynom-funktion

nichtllineare Funktion

**Transformation**

Aktivierungs-funktion

$m=LL+(UL-LL)/2$

$Lim= UL - m$

116a

116b

| Messwert $x$ | → | $y=ax^n+..bx+c$ | → | $y <- L(y)$ | → | $y <- abs(y-m)$ | → |

116c

116d

108

R
Ge
Gr

# Fig. 5

Fig. 6

Messwerte

**Fig. 7**

transformierte Messwerte

**Fig. 8**

Aktivierungsfunktion

Transformed Thickness [mm]

**Fig. 9**

m=0,5   s = 0,05                    m=0,5    s = 0,0005

y                                    y

a)                                   b)

**Fig. 10**

Sigmoid-Regression

**Fig. 11**

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006053685 A2